# EUROPÄISCHE PATENTSCHRIFT

(11) **EP 3 420 794 B1**
(45) Veröffentlichungstag und Bekanntmachung des Hinweises auf die Patenterteilung: **08.09.2021**
(21) Anmeldenummer: 18163855.2
(22) Anmeldetag: 26.03.2018
(51) Int. Cl.: A01D 41/127, G01F 25/00

(54) **SYSTEM ZUR ERTRAGSMESSUNG UND VERFAHREN ZUM BETREIBEN EINES SYSTEMS ZUR ERTRAGSMESSUNG**
SYSTEM FOR YIELD MEASUREMENT AND METHOD FOR OPERATING A SYSTEM FOR YIELD MEASUREMENT
SYSTÈME DE MESURE DE RENDEMENT ET PROCÉDÉ D'UTILISATION D'UN SYSTÈME DE MESURE DE RENDEMENT

(30) Priorität: 28.06.2017 DE 102017114405
(43) Veröffentlichungstag der Anmeldung: 02.01.2019
(73) Patentinhaber: CLAAS Selbstfahrende Erntemaschinen GmbH, 33428 Harsewinkel (DE)
(72) Erfinder: Middelberg, René, 49080 Osnabrück (DE); Sprigade, Daniel, 59427 Unna (DE); Fischer, Frédéric, 59823 Arnsberg (DE)
(74) Vertreter: CLAAS Gruppe

(56) Entgegenhaltungen:
- EP-A1- 2 960 634
- WO-A1-2012/088405

## Beschreibung

Die vorliegende Erfindung betrifft ein System zur Ertragsmessung gemäß dem Oberbegriff des Anspruches 1. Weiterhin betrifft die Erfindung ein Verfahren zum Betreiben eines Systems zur Ertragsmessung gemäß dem Anspruch 7 sowie ein landwirtschaftliches Arbeitsfahrzeug gemäß dem Anspruch 14.

Systeme zur Ertragsmessung kommen insbesondere bei landschaftlichen Arbeitsfahrzeugen zum Einsatz, um die Menge eines während eines Ernteprozesses aufgenommenen schüttgutförmigen Erntegutes je Flächeneinheit zu bestimmen. Bei einem landwirtschaftlichen Arbeitsfahrzeug kann es sich beispielsweise um eine selbstfahrende Erntemaschine mit einem Behältnis zur Aufnahme von Schüttgut handeln oder um ein von einem Traktor gezogenes Transportfahrzeug mit einem Behälter, wie einen Überladewagen. Die Ertragsmessung wird unter anderem von einem landschaftlichen Betrieb zur internen betriebswirtschaftlichen Auswertung herangezogen oder von einem mit dem Ernteprozess beauftragten Lohnunternehmen zu Zwecken der Abrechnung verwendet.

Ein solches System zur Ertragsmessung umfasst ein Behältnis zur Aufnahme von insbesondere agrarwirtschaftlichem, Schüttgut, eine zumindest eine Förderkomponente umfassende Fördervorrichtung zur Zuführung von Schüttgut in das Behältnis, zumindest eine erste Sensoreinrichtung zur Bestimmung des Volumens oder des Gewichts des durch die Fördervorrichtung in das Behältnis geförderten Schüttgutes, sowie eine Steuereinrichtung, die zur Auswertung der Signale der zumindest einen ersten Sensoreinrichtung eingerichtet ist.

Ein System zur Ertragsmessung sowie ein Verfahren zum Betreiben eines Systems zu Ertragsmessung sind aus der EP 2 960 634 A1 bekannt. Die EP 2 960 634 A1 beschreibt einen Behälter zur Aufnahme von Schüttgut, dem von einer Fördervorrichtung Schüttgut zugeführt wird. Das aus der Fördervorrichtung austretende Schüttgut wird von einem Massendurchsatzsensor erfasst. Der Massendurchsatzsensor ist als Wägezelle ausgeführt. Zur Erhöhung der Messgenauigkeit des Massendurchsatzsensors sind unterhalb des Behälters Akkumulationssensoren angeordnet. Durch die Akkumulationssensoren wird die Anhäufung des Schüttgutes im Behälter während des Befüllvorganges periodisch überwacht, wodurch das Maß bestimmt wird, mit dem sich das Gewicht des Schüttkegels verändert. Das Signal der Akkumulationssensoren wird von einer Steuereinrichtung herangezogen, um einen Kalibrierungsfaktor zu bestimmen, der auf den Massendurchsatzsensor anwendbar ist.

Die WO2012088405 A1 beschreibt eine Vorrichtung und ein Verfahren mit den Merkmalen des Oberbegriffes der Ansprüche 1 und 7. Ausgehend von diesem Stand der Technik besteht die Aufgabe der Erfindung darin, ein System zur Ertragsmessung sowie ein Verfahren zum Betreiben eines Systems zur Ertragsmessung bereitzustellen, welches sich durch einen einfacheren Aufbau auszeichnet.

Diese Aufgabe wird durch ein System zur Ertragsmessung gemäß dem Anspruch 1 sowie ein Verfahren zum Betreiben eines Systems zur Ertragsmessung gemäß dem Anspruch 7 gelöst.

Vorteilhafte Weiterbildungen sind Gegenstand der hiervon abhängigen Unteransprüche.

Gemäß dem Anspruch 1 wird ein System zur Ertragsmessung vorgeschlagen, umfassend ein Behältnis zur Aufnahme von Schüttgut, eine zumindest eine Förderkomponente umfassende Fördervorrichtung zur Zuführung von Schüttgut in das Behältnis, zumindest eine erste Sensoreinrichtung zur Bestimmung des Volumens oder des Gewichts des durch die Fördervorrichtung in das Behältnis geförderten Schüttgutes, sowie eine Steuereinrichtung, die zur Auswertung der Signale des zumindest ein ersten Sensors eingerichtet ist. Die zur Ertragsmessung verwendete erste Sensoreinrichtung kann auf dem Funktionsprinzip der Volumenstrommessung, welche insbesondere berührungslos erfolgen kann, oder einer Kraft-/Impulsmessung basieren. Im letzteren Fall wird daraus der Massenstrom bestimmt. Um das System zur Ertragsmessung zu vereinfachen, wird erfindungsgemäß vorgeschlagen, dass zumindest eine Förderkomponente durch einen Elektromotor antreibbar ist und dass der Fördervorrichtung zumindest eine weitere Sensoreinrichtung zur Messung wenigstens einer physikalischen Größe des Elektromotors zugeordnet ist, mittels derer ein von der Förderkomponente aufgenommenes Drehmoment durch die Steuereinrichtung bestimmbar ist. Das von der Förderkomponente aufgenommene Drehmoment respektive der Drehmomentverlauf korrelieren mit der von der Förderkomponente geförderten Masse des Schüttgutes. D. h., die Bestimmung des von der Förderkomponente aufgenommenen Drehmomentes ist zur Ertragsmessung durch eine geeignete Signalauswertung heranziehbar. Durch eine kontinuierliche Bestimmung des Drehmomentes lassen sich zudem Schwankungen der Ertragsdichte eines Feldes, d.h. dem Ertrag pro Quadratmeter, die beispielsweise auf eine ungleichmäßige Düngung, Witterungseinflüsse oder dergleichen zurückzuführen sein können, kompensieren. Dadurch lässt sich die Genauigkeit der Ertragsmessung auch bei Schwankungen der Ertragsdichte innerhalb eines Feldes erhöhen. Darüber hinaus werden die mittels des durch die Steuereinrichtung bestimmten Drehmomentes Messwerte für die von der Förderkomponente geförderten Masse zur Kalibrierung des ersten Sensors herangezogen. Somit ergeben sich gegenüber dem aus der EP 2 960 634 A1 und WO2012088405A1 bekannten System zur Ertragsmessung zumindest zwei signifikante Vorteile. Zum einen kann auf die Anordnung von dem Behältnis zur Aufnahme von Schüttgut zugeordneten Akkumulationssensoren verzichtet werden, zum anderen bietet die Verwendung eines Elektromotors zum Antreiben der zumindest einen Förderkomponente der Fördervorrichtung aufgrund der guten Regelbarkeit des Elektromotors Vorteile bei deren Betrieb.

Mit anderen Worten stellt sich durch die Verwendung des Elektromotors zum Antreiben der zumindest einen Förderkomponente der Fördervorrichtung ein Synergieeffekt ein, nämlich die Vereinfachung der Kalibrierung der Ertragsmessung.

Die durch den Elektromotor angetriebene Förderkomponente ist die Komponente der Fördervorrichtung, aus welcher das Schüttgut unmittelbar in das Behältnis austritt bzw. an das Behältnis übergeben wird. Ein elektromotorischer Antrieb einer oder mehrerer Komponenten der Fördervorrichtung ist selbstverständlich denkbar, um in entsprechender Weise das aufgenommene Drehmoment zumindest einer dieser elektromotorisch angetriebenen Komponenten bestimmen zu können.

Die Steuereinrichtung ist dazu eingerichtet in Abhängigkeit von einem erfassten Füllstand des Schüttgutes im Behältnis die Messung der wenigstens einen physikalischen Größe des Elektromotors durchzuführen. Hierzu kann die Messung der wenigstens einen physikalischen Größe innerhalb eines Füllstandintervalls erfolgen, welches einem definierten Volumen des von dem Behälter aufgenommenen Schüttgutes entspricht. In der Regel ist in dem Behältnis zumindest ein Füllstandsensor zugeordnet, welcher das jeweilige Erreichen eines prozentualen Anteils des maximalen Füllstands einer Bedienperson signalisiert. Der zumindest eine Füllstandsensor kann beispielsweise als optischer Sensor oder als mechanischer Sensor ausgeführt sein. Bevorzugt kommen zumindest zwei Füllstandsensoren zum Einsatz. Somit kann das Erreichen eines ersten, niedrigeren Füllstandes, welcher von einem ersten Füllstandsensor erfasst wird, den Beginn der Messung der wenigstens einen physikalischen Größe markieren. Mit dem hierzu zeitlich versetzten Erreichen des zweiten, höheren Füllstandes, welcher von einem zweiten Füllstandsensor erfasst wird, wird das Ende der Messung der wenigstens einen physikalischen Größe gekennzeichnet. Innerhalb dieses Füllstandintervalls wird von der Fördervorrichtung ein definiertes Volumen in das Behältnis gefördert. Das innerhalb des Füllstandintervalls geförderte Volumen sowie der innerhalb des Füllstandintervalls durch Messung der zumindest einen physikalischen Größe bestimmte Drehmomentverlauf können als automatischer Justage- bzw. Kalibrierwert für die Ertragsmessung für die zumindest eine erste Sensoreinrichtung verwendet werden.

Vorteilhaft ist es, wenn die Steuereinrichtung zur Durchführung einer Initialmessung der wenigstens einen physikalischen Größe des Elektromotors im lastfreien Zustand der Fördervorrichtung eingerichtet ist. Während der Initialmessung wird durch die Messung der wenigstens einen physikalischen Größe das Drehmoment bestimmt, welches die durch den Elektromotor angetriebene Förderkomponente aufnimmt, wenn von dieser kein Schüttgut gefördert wird. Hierdurch lässt sich die Genauigkeit des Kalibriervorganges erhöhen. So kann durch die Initialmessung beispielsweise das durch Reibung zwischen der Förderkomponente und dessen Lagerung hervorgerufene Leerlastmoment bestimmt werden. Die Steuereinrichtung kann zur automatischen Durchführung der Initialmessung innerhalb von Zeitfenstern eingerichtet sein, wenn sich die Fördervorrichtung in einem Betriebszustand befindet, innerhalb dessen das Fördern von Schüttgut nicht durchgeführt wird. Dies kann beispielsweise bei einem als Mähdrescher ausgeführten landwirtschaftlichen Arbeitsfahrzeug dann der Fall sein, wenn diese sich unmittelbar vor der Aufnahme eines Erntebetriebes befindet. Weitere beispielhafte Betriebszustände können das Abtanken bei Stillstand des Mähdreschers oder Vorgewendefahrten sein. Derartige Betriebssituationen können von der Steuereinrichtung anhand von internen und externen Betriebsparametern des landwirtschaftlichen Arbeitsfahrzeugs bestimmt werden. Der Vorgang der Initialmessung lässt sich auch manuell von einer Bedienperson starten.

Insbesondere kann die Steuereinrichtung zur Hinterlegung von Kennlinien oder Kennlinienfeldern für Drehmomentverläufe der durch den Elektromotor angetriebenen zumindest einen Förderkomponente der Fördervorrichtung eingerichtet sein. Hierzu umfasst die Steuereinrichtung zumindest eine Prozessoreinheit, zumindest eine Speichereinheit sowie Eingabe-Ausgabe-Schnittstellen. Die in der zumindest einen Speichereinheit hinterlegbaren Kennlinien oder Kennlinienfelder können fruchtartspezifisch sein, was insbesondere für das jeweilige Gewicht bzw. die jeweilige Dichte des Schüttgutes von Bedeutung sein kann, und/oder unterschiedliche Feuchtigkeitsgehalt des Schüttgutes berücksichtigen. Das von der Förderkomponente aufgenommene Drehmoment ist ein Maß für das Gewicht des transportierten Schüttgutes. Die jedoch unabhängig davon, ob von der Förderkomponente mehr Schüttgut, ein Schüttgut höherer Dichte oder sehr feuchtes Schüttgut transportiert wird. Diesem Umstand lässt sich durch die Kenntnis des geförderten Volumens innerhalb des Füllstandintervalls Rechnung tragen. Die Kennlinien oder Kennlinienfelder bilden den Zusammenhang zwischen dem von der elektromotorisch angetriebenen Förderkomponente der Fördervorrichtung aufgenommenen Drehmoment und der Masse des Schüttgutes ab. Weiterhin bilden die hinterlegbaren Kennlinien oder Kennlinienfelder den Zusammenhang zwischen der jeweiligen Schüttgutart respektive Fruchtart des Erntegutes und dessen Feuchtigkeitswerten ab. Darüber hinaus können auch Kennlinien oder Kennlinienfelder hinterlegbar sein, welche Drehmomentverläufe enthalten, die sich aufgrund von Verschleiß der zumindest einen elektromotorisch angetriebenen Förderkomponente der Fördervorrichtung einstellen können. Dadurch ließen sich im Zuge der Bestimmung des von der Förderkomponente aufgenommenen Drehmomentes Systemdefekte bzw. Einschränkungen der elektromotorisch angetriebenen Förderkomponente detektieren. Dies kann insbesondere während einer Initialmessung erfolgen.

Zur Bestimmung des aufgenommenen Drehmomentes kann die zumindest eine weitere Sensoreinrichtung zur Messung von Strom als wenigstens eine physikalische Größe eingerichtet sein. Die Bestimmung des Drehmoments kann indirekt durch die Messung des Stroms bei konstanter Spannung oder aber durch Strom- und Spannungsmessung bei variabler Spannung erfolgen, da der Strom proportional zum Drehmoment ist. Die Messwerte für den Strom und die Spannung können zudem zur Berechnung einer von dem Elektromotor abgegebenen elektrischen Leistung durch die Steuereinrichtung herangezogen werden. Die Antriebsdrehzahl des Elektromotors wird zu dessen Regelung gemessen, beispielsweise mit einem Resolver oder einem Hall-Sensor.

Bevorzugt kann die Steuereinrichtung dazu eingerichtet sein, den Elektromotor mittels eines Frequenzumrichters in Abhängigkeit von zumindest einem Betriebsparameter der Fördervorrichtung anzusteuern. Ein Betriebsparameter kann beispielsweise der Durchsatz der Fördervorrichtung sein. Neben einer durchsatzabhängigen Antriebsgeschwindigkeit der zumindest einen Förderkomponente der Fördervorrichtung lassen sich auch ein sanftes Anlaufen sowie Abbremsen der Förderkomponente darstellen. Die durchsatzabhängige Ansteuerung der Antriebsgeschwindigkeit der Förderkomponente hat den Vorteil, dass der Verschleiß gemindert sowie das Geräuschniveau der Fördervorrichtung herabgesetzt werden können. Weitere Betriebsparameter der Fördervorrichtung können die Feuchtigkeit oder eine Bruchgefahr des Schüttgutes sein. Beides wirkt sich bei einer zu hohen Fördergeschwindigkeit der Förderkomponente nachteilig auf die Qualität des Schüttgutes aus. Ein weiterer Vorteil ergibt sich daraus, dass der Frequenzumrichter bereits entsprechende Strom- und/oder Spannungssignale bereitstellt, die von der Steuereinrichtung auswertbar sind. Die Notwendigkeit, dem Behältnis zusätzliche Sensoren zur Bestimmung dieser physikalischen Größen zuzuordnen, wie es im eingangs genannten Stand der Technik der Fall ist, entfällt.

Weiterhin kann das System einen Feuchtigkeitssensor zur Bestimmung der Feuchtigkeit des von der Fördervorrichtung geförderten Schüttgutes umfassen. Ein solcher Sensor dient dazu, die Feuchtigkeit im Schüttgut zu detektieren, um das tatsächliche Gewicht, das heißt die Trockenmasse, des von dem Behältnis aufgenommenen Schüttgutes bestimmen zu können. Zur Kalibrierung des Feuchtigkeitssensors kann ebenfalls die Bestimmung des Drehmomentverlaufs während eines Füllstandintervalls herangezogen werden. Das innerhalb des Füllstandintervalls geförderte Volumen sowie der innerhalb des Füllstandintervalls bestimmte Drehmomentverlauf können als automatischer Justage- bzw. Kalibrierwert für die Feuchtigkeitsmessung durch den Feuchtigkeitssensors verwendet werden.

Weiterhin wird die Aufgabe durch ein Verfahren zum Betreiben eines Systems zur Ertragsmessung gemäß dem nebengeordneten Anspruch 7 gelöst.

Der nebengeordnete Anspruch 7 schlägt ein Verfahren zum Betreiben eines Systems Ertragsmessung vor, wobei von einer zumindest eine Förderkomponente umfassenden Fördervorrichtung einem Behältnis Schüttgut zugeführt wird, dessen Gewicht oder Volumen mittels einer Steuereinrichtung durch eine Auswertung von Signalen zumindest einer ersten Sensoreinrichtung bestimmt wird. Das Verfahren ist dadurch gekennzeichnet, dass zumindest eine Förderkomponente der Fördervorrichtung elektromotorisch angetrieben wird, wobei zur Kalibrierung der Ertragsmessung ein von der Fördervorrichtung aufgenommenes Drehmoment durch Messung wenigstens einer physikalischen Größe des Elektromotors mittels zumindest einer weiteren Sensoreinrichtung bestimmt wird. Die von der Förderkomponente respektive der Fördervorrichtung geförderte Schüttgutmasse korreliert mit dem von der Förderkomponente aufgenommenen Drehmoment. Durch das erfindungsgemäße Verfahren lässt sich eine initiale Kalibrierung der ersten Sensoreinrichtung durchführen, welche bei jedem erneuten Ernteeinsatz erneut durchführbar ist.

Dabei können die Messungen wenigstens einen der physikalischen Größe innerhalb zumindest eines Füllstandintervalls durchgeführt werden. Eine Füllstandüberwachung der Schüttgüter aufnehmenden Behältnisses wird im Allgemeinen durch zumindest einen dem Behältnis zugeordneten Füllstandsensor realisiert. Der zumindest eine dem Behältnis zugeordnete Füllstandsensor ist mit der Steuereinrichtung signaltechnisch verbunden, um Füllstanddaten an diese zur Auswertung zu übermitteln. Wird während des Befüllens des Behältnisses ein erster Schwellwert erreicht bzw. passiert, kann die Messung der zumindest einen physikalischen Größe zur Bestimmung des Drehmoments durch die Steuereinrichtung automatisch initiiert werden. Mit dem Erreichen eines zweiten Schwellwertes des Füllstandes wird die Messung durch die Steuereinrichtung automatisch beendet. Das innerhalb des Füllstandintervalls von dem Behältnis aufgenommene Schüttgutvolumen wird zusammen mit der durch die Bestimmung des Drehmoments ermittelten Schüttgutmasse als automatischer Justagewert für die Ertragsmessung verwendet.

Bevorzugt kann eine Initialmessung der wenigstens einen physikalischen Größe des Elektromotors in einem lastfreien Zustand der Fördervorrichtung durchgeführt werden. Auf diese Weise lässt sich das erforderliche Drehmoment der zumindest einen elektromotorisch angetriebenen Förderkomponente bestimmen, welche auf Reibung zwischen der Förderkomponente und deren Lagerung zurückzuführen ist. Hierdurch lässt sich die Genauigkeit des Verfahrens erhöhen. Zur Durchführung der Initialmessung können geeignete Betriebszustände der Fördervorrichtung genutzt werden, während der eine Förderung von Schüttgut durch die Fördervorrichtung nicht zu erwarten ist. Solche Betriebszustände können durch eine Bedienperson bestimmt werden, durch welche eine Initialmessung manuell ausgelöst wird. Alternativ können solche Betriebszustände durch die Steuereinrichtung anhand von bereitgestellten internen und externen Betriebsparametern bestimmt werden, so dass von der Steuereinrichtung die Initialmessung automatisiert ausgelöst werden kann.

Vorteilhaft ist es, dass die Initialmessung der wenigstens einen physikalischen Größe des Elektromotors während des laufenden Betriebes der Fördervorrichtung wiederholt durchgeführt werden kann. Auf diese Weise lassen sich Parameteränderungen, welche Einfluss auf den Betrieb der Fördervorrichtung haben können, berücksichtigen. Hierzu kann von der Steuereinrichtung das Auftreten eines zur wiederholten Durchführung der Initialmessung geeigneten Betriebszustandes erfasst werden.

Insbesondere kann zur Bestimmung des von der zumindest einen Förderkomponente aufgenommenen Drehmomentes zumindest der Strom gemessen und ausgewertet wird. Die Messung des Stroms bei konstanter Spannung oder des Stroms und der Spannung bei variabler Spannung hat den Vorteil, dass diese mit weniger messtechnischem Aufwand realisierbar sind. Ein zur Ansteuerung des Elektromotors vorgesehener Frequenzumrichter stellt entsprechende Signale für den Strom und die Spannung als physikalische Größen bereit. Ein Drehmomentsensor, welcher der wenigstens einen Förderkomponente zugeordnet wird, kann somit entfallen. Das von der Förderkomponente aufgenommene Drehmoment wird, da stets proportional zum Strom, indirekt durch die Strommessung bestimmt.

Weiterhin wird die Feuchtigkeit des von der Fördervorrichtung beförderten Schüttgutes bestimmt. Eine Kalibrierung eines hierfür vorgesehenen Feuchtigkeitssensors kann in der Kalibrierung der Ertragsmessung entsprechender Weise durchgeführt werden. In Kenntnis der innerhalb eines Füllstandintervalls geförderten Schüttgutmenge und des Schüttgutvolumens kann sich bei bekannter Dichte des Schüttgutes auf die Feuchtigkeit schließen lassen.

Gemäß einer vorteilhaften Weiterbildung kann mittels der Steuereinrichtung eine Kennlinie oder ein Kennlinienfeld für einen Drehmomentverlauf der Förderkomponente erstellt werden. Hierzu kann die Art des Schüttgutes der Steuereinrichtung vorgegeben und können die Messverläufe der Feuchtigkeitsmessung, der Strommessung sowie der Gewichts- oder Volumenmessung von der Steuereinrichtung aufgezeichnet und ausgewertet werden. Hierzu kann die Steuereinrichtung entsprechend eingerichtet sein.

Des Weiteren wird ein landwirtschaftliches Arbeitsfahrzeug vorgeschlagen, gekennzeichnet durch ein System zur Ertragsmessung nach einem der Ansprüche 1 bis 7, wobei das landwirtschaftliche Arbeitsfahrzeug zur Durchführung eines Verfahrens nach einem der Ansprüche 8 bis 14 eingerichtet ist. Als elektromotorisch angetriebene Förderkomponente kommt beispielsweise bei einem als Mähdrescher ausgebildeten landwirtschaftlichen Arbeitsfahrzeug die Korntankauslaufschnecke in Betracht. Denkbar ist auch der elektromotorische Antrieb des sogenannten Kornelevators.

Die vorliegende Erfindung wird nachstehend anhand von in den Zeichnungen dargestellten Ausführungsbeispielen näher erläutert.

Es zeigen:
- Fig. 1: eine schematische Ansicht eines landwirtschaftlichen Arbeitsfahrzeugs mit einem Behältnis zur Aufnahme von Schüttgut;
- Fig. 2: eine schematische Ansicht eines Systems zur Ertragsmessung;
- Fig. 3: eine schematische Ansicht eines Behältnisses mit einer Fördervorrichtung gemäß einer weiteren Ausführungsform;
- Fig. 4: eine schematische Darstellung einer Steuereinrichtung des Systems zur Ertragsmessung.

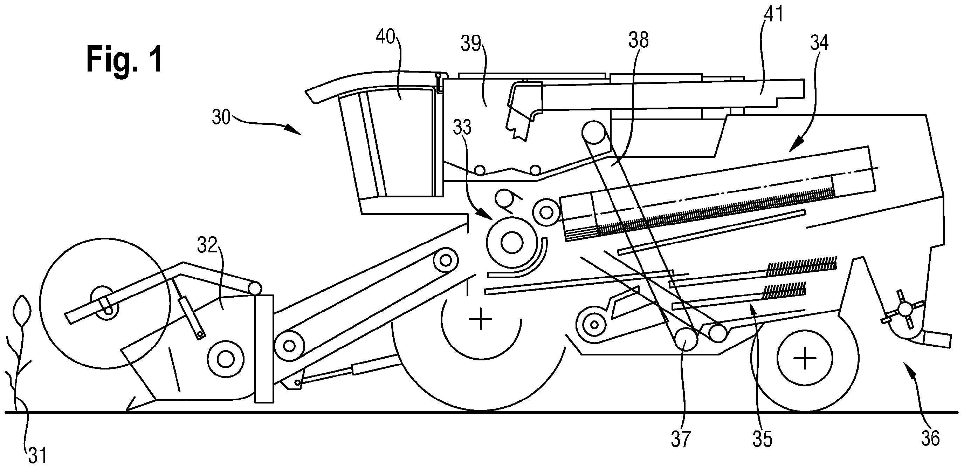

In Fig. 1 ist eine schematische Ansicht eines als Mähdrescher 30 ausgeführten landwirtschaftlichen Arbeitsfahrzeugs mit einem als Korntank 39 ausgebildeten Behältnis zur Aufnahme von schüttgutförmigen Erntegut dargestellt. Zur Aufnahme von Erntegut 31 weist der Mähdrescher 30 ein als Schneidwerk ausgeführtes Vorsatzgerät 32 auf. Das von dem Vorsatzgerät 32 abgeerntete Erntegut 31 wird einer Dreschvorrichtung 33 zugeführt, in welcher das Erntegut 31 separiert wird. Die in der Dreschvorrichtung 33 abgeschiedenen Erntegutbestandteile, im Wesentlichen schüttgutförmiges Korn sowie Nichtkornbestandteile, werden einer Reinigungsvorrichtung 35 zugeführt, um das schüttgutförmige Korn von den Nichtkornbestandteilen zu trennen. Von der Reinigungsvorrichtung 35 wird das Korn einer Querförderschnecke 37 zugeführt, welche das Korn zu einem Kornelevator 38 fördert. Der Kornelevator 38 fördert das Korn mittels einer nicht dargestellten Korntankauslaufschnecke in den Korntank 39. Weiterhin umfasst der Mähdrescher 30 eine Abscheidevorrichtung 34, eine Häcksel- und Verteilvorrichtung 36 sowie eine Fahrerkabine 40. Das im Korntank 39 gebunkerte Korn wird durch ein Korntankauslaufrohr 41 auf einen Ladewagen zum Abtransport überladen.

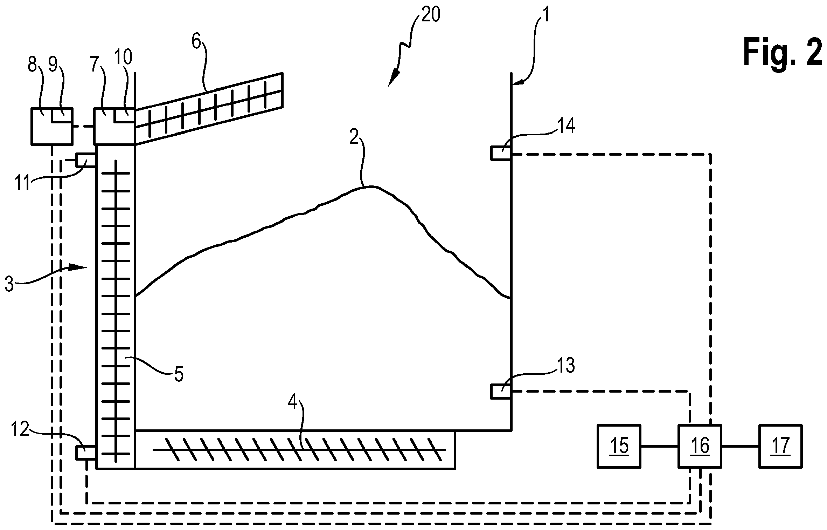

In Figur 2 ist eine schematische Ansicht eines Systems 20 zur Ertragsmessung dargestellt, umfassend ein Behältnis 1 mit einer Fördervorrichtung 3. Bei dem Behältnis 1 kann es sich um den Korntank 39 und bei der Fördervorrichtung 3 um die Querförderschnecke 37, den Kornelevator 38 sowie die nicht dargestellte Korntankauslaufschnecke des Mähdreschers 30 handeln. Das Behältnis 1 dient der Aufnahme von Schüttgut 2, insbesondere Korn. Die Fördervorrichtung 3 umfasst zumindest eine Förderkomponente. In dem dargestellten Ausführungsbeispiel umfasst die Fördervorrichtung 3 mehrere Förderkomponenten, eine Querförderkomponente 4, eine Vertikalförderkomponente 5 sowie eine Abförderkomponente 6. Von der Querförderkomponente 4 wird Schüttgut an die Vertikalförderkomponente 5 gefördert, welche das Schüttgut in im Wesentlichen vertikaler Richtung der Abförderkomponente 6 zuführt, die das Schüttgut in das Behältnis 1 abfördert. Die Abförderkomponente 6 ist im dargestellten Ausführungsbeispielen als Schneckenförderer ausgebildet. Der Antrieb zumindest der Abförderkomponente 6 erfolgt durch einen Elektromotor 7. Der Elektromotor 7 ist mittels eines Frequenzumrichters 8 ansteuerbar. Der Frequenzumrichter 8 weist zumindest einen Sensor 9 zur Messung des Stroms und/oder der Spannung auf. Der Elektromotor 7 ist mit einem als Hall-Sensor oder Resolver ausgeführten Drehzahlsensor 10 ausgestattet. Die gute Regelbarkeit der elektromotorisch angetriebenen Abförderkomponente 6 bietet verschiedene Vorteile, wie z.B. ein sanftes Anlaufen sowie Stoppen der Abförderkomponente 6 oder eine durchsatzabhängige Geschwindigkeitsregelung der Abförderkomponente 6, um den Komponentenverschleiß und das Geräuschniveau herabzusetzen. Darüber hinaus lässt sich die Gefahr einer Beschädigung des Schüttgutes, z.B. die Bruchkorngefahr, durch eine entsprechende Geschwindigkeitsregelung reduzieren.

Das System 20 zur Ertragsmessung weist eine der Fördervorrichtung 3 zugeordnete erste Sensoreinrichtung 11 auf, welche der Bestimmung des Gewichts oder des Volumens des von der Fördervorrichtung 3 geförderten Schüttgutes 2 dient. Die erste Sensoreinrichtung 11 kann berührungslos arbeiten, um das von der Vertikalförderkomponente 5 geförderte Schüttgutvolumen zu bestimmen. Hierzu kann die erste Sensoreinrichtung 11 beispielsweise in Form einer Lichtschranke ausgestaltet sein, wie sie aus der EP 0 931 445 A1 bekannt ist. Alternativ kann die Sensoreinrichtung 11 auch als eine Kraftmesszelle ausgebildet sein, um das Gewicht des geförderten Schüttgutes 2 zu bestimmen. Weiterhin ist der der Fördervorrichtung 3 ein Feuchtigkeitssensor 12 zugeordnet, mit dem kontinuierlich die Feuchtigkeit des Schüttgutes 2 gemessen wird.

Im Inneren des Behältnisses 1 ist zumindest ein Füllstandsensor angeordnet, in dem in Figur 2 dargestellten Ausführungsbeispiel sind zwei Füllstandsensoren 13, 14 vorgesehen, welche als mechanische Taster ausgebildet sind. Der zumindest eine Füllstandsensor kann auch als ein optischer Sensor ausgebildet sein. Der eine Füllstandsensor 13 ist in der Nähe des Bodens an einer Seitenwand des Behältnisses 1 angeordnet, während der andere Füllstandsensor 14 hierzu beabstandet im oberen Bereich der Seitenwand des Behältnisses 1 angeordnet ist. Die Positionierung der Füllstandsensoren 13 und 14 ist derart gewählt, dass sich zwischen diesen ein definiertes Volumen einstellt. So kann die Position des Füllstandsensors 13 einem Füllstand des Behältnisses 1 von beispielsweise 30 % entsprechen, während die Position des Füllstandsensors 14 einem Füllstand des Behältnisses 1 von beispielsweise 70 % entspricht. Hiervon abweichende Positionierungen der Füllstandsensoren sind denkbar.

Das System 20 zur Ertragsmessung umfasst eine Steuereinrichtung 15, welche durch ein Bussystem 16 mit dem Sensor 9 des Frequenzumrichters 8, dem Drehzahlsensor 10, der ersten Sensoreinrichtung 11, dem Feuchtigkeitssensor 12 sowie den Füllstandsensoren 13 und 14 signaltechnisch verbunden ist. Mit dem Bezugszeichen 17 ist eine Eingabe-Ausgabevorrichtung bezeichnet welche ebenfalls durch das Bussystem 16 mit der Steuereinrichtung 15 verbunden ist. Die Eingabe-Ausgabevorrichtung 17 ermöglicht es einer Bedienperson mit der Steuereinrichtung 15 zu interagieren.

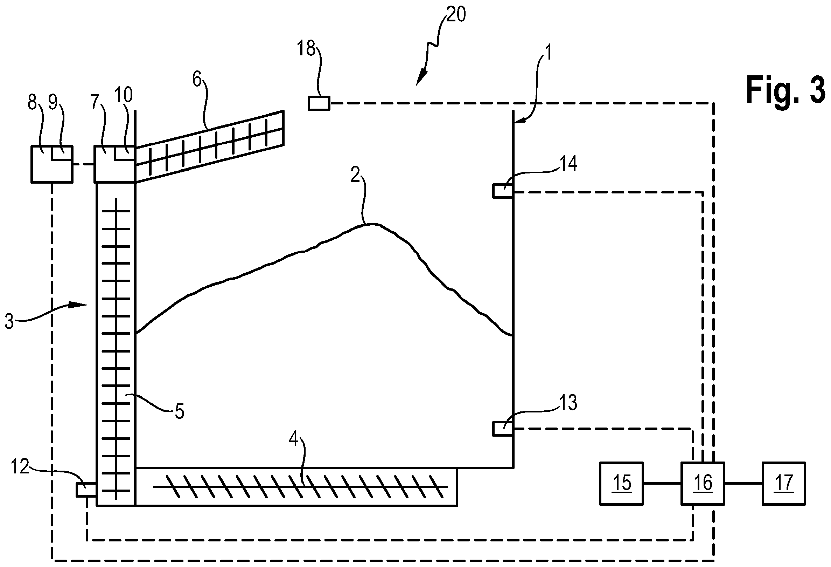

In Figur 3 ist eine schematische Ansicht des Behältnisses mit der Fördervorrichtung 3 gemäß einer weiteren Ausführungsform dargestellt. Im Unterschied zu der vorangehend beschriebenen Ausführungsform ist als eine erste Sensoreinrichtung 18 eine Kraftmesszelle zur Kraft-/Impulsmessung vorgesehen, um das von der Fördervorrichtung 3 geförderte Gewicht des Schüttgutes 2 zu bestimmen. Auch diese erste Sensoreinrichtung 18 ist durch das Bussystem 16 mit der Steuereinrichtung 15 signaltechnisch verbunden. Im Übrigen unterscheidet sich der Aufbau des Systems 20 zur Ertragsmessung nicht von dem in Figur 2 dargestellten.

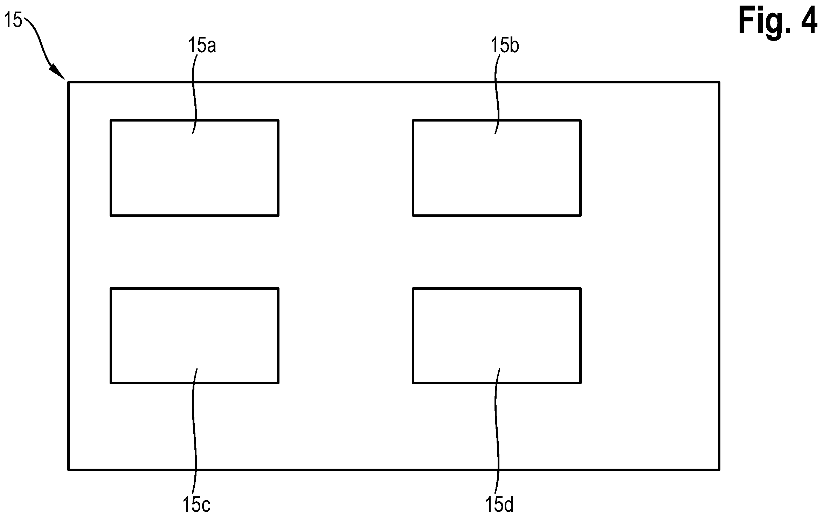

In Figur 4 ist die Steuereinrichtung 15 des Systems 20 zur Ertragsmessung gemäß den vorstehend beschriebenen Ausführungsformen schematisch dargestellt. Die Steuereinrichtung 15 umfasst zumindest eine Prozessoreinheit 15a, wenigstens eine Speichereinheit 15b, sowie eine oder mehrere Eingabe-Ausgabe-Schnittstellen 15c, 15d. In der wenigstens einen Speichereinheit 15b sind Kennlinien oder Kennlinienfelder für Drehmomentverläufe zumindest der von dem Elektromotor 7 angetriebenen Abförderkomponente 6 hinterlegbar. Mittels der Eingabe-Ausgabe-Schnittstellen 15c, 15d empfängt die Steuereinrichtung 15 jeweils die Messwerte der ersten Sensoreinrichtung 11 bzw. 18 sowie des Feuchtigkeitssensors 12 und der Füllstandsensoren 13 und 14.

Nachstehend wird der Verfahrensablauf anhand des in Figur 2 dargestellten Ausführungsbeispieles erläutert. Das von der Abförderkomponente 6 aufgenommene Drehmoment korreliert mit der durch die Abförderkomponente 6 geförderten Masse des Schüttgutes 2. Somit wird durch die Bestimmung des von der Abförderkomponente 6 aufgenommenen Drehmomentes eine Ertragsmessung möglich. Das Drehmoment ist proportional zum Strom, welcher durch den Sensor 9 des Frequenzumrichters 8 kontinuierlich gemessen wird. Anhand der in der wenigstens einen Speichereinheit 15b hinterlegten Kennlinien bzw. Kennlinienfelder der Drehmomentverläufe lässt sich einem jeweils bestimmten Drehmoment eine Masse des Schüttgutes 2 zuordnen. Denkbar ist auch die direkte Messung des Drehmoments mittels eines Drehmomentsensors.

Zur Kalibrierung der ersten Sensoreinrichtung 11 ist es erfindungsgemäß vorgesehen, dass die Bestimmung des Drehmoments bzw. des Drehmomentverlaufes innerhalb eines Füllstandintervalls erfolgt. Beginn und Ende des Füllstandintervalls werden durch die Füllstandsensoren 13 und 14 detektiert. Wird durch die Befüllung des Behältnisses 1 der Füllstandsensor 13 aktiviert, so wird das entsprechende Signal des Füllstandsensors 13 von der Steuereinrichtung 15 verarbeitet, um den Messvorgang zur Bestimmung des Drehmoments automatisch zu starten. Erreicht der Füllstand im Behältnis 1 eine Höhe, welche den Füllstandsensor 14 aktiviert, so wird das entsprechende Signal des Füllstandsensors 13 von der Steuereinrichtung 15 verarbeitet, um den Messvorgang automatisch zu beenden.

Die innerhalb des Füllstandintervalls dem Behältnis 1 durch die Abförderkomponente 6 zugeführte Schüttgutmasse lässt sich mittels der in der Speichereinheit 15b hinterlegten Kennlinien bzw. Kennlinienfelder von Drehmomentverläufen bestimmen. Anhand der Kennlinien bzw. Kennlinienfelder wird von der Steuereinrichtung 15 einem Drehmoment eine Masse zugeordnet. Das zwischen den Füllstandsensoren 13 und 14 bekannte definierte Volumen wird zusammen mit der aus dem Drehmoment bestimmten Masse automatisch als Justagewert für die Ertrags- und die Feuchtemessung verwendet. Mit diesem Justagewert ist es möglich, eine kontinuierliche Kompensation von Dichteschwankungen vorzunehmen, die während der Zuführung von Schüttgut 2 in das Behältnis 1 auftreten können. So können beim Ernten eines agrarwirtschaftlichen Produktes innerhalb eines abzuerntenden Feldes Ertragsschwankungen auftreten, unter anderem die auf eine ungleichmäßige Bestandsdichte zurückzuführen sind.

Um eine Erhöhung der Genauigkeit des Verfahrens zu erreichen, findet zumindest eine Initialmessung statt, während der das von der Abförderkomponente 6 aufgenommene Drehmoment im lastfreien Zustand, d. h. ohne Schüttgut 2 zu fördern, bestimmt wird. Eine solche Initialmessung kann automatisch innerhalb bestimmter Zeitfenster durchgeführt werden, in denen kein Materialfluss in der Fördervorrichtung 3 vorliegt. So kann im Fall des Mähdreschers 30, auf welchem das erfindungsgemäße System 20 zur Ertragsmessung zum Einsatz kommen kann, direkt vor der Aufnahme des Erntebetriebes, beim Abtanken im Stillstand oder bei längeren vorgehende Fahrten durchgeführt werden. Die Durchführung der Initialmessung wird aber die Steuereinrichtung 15 initiiert.

Ein weiterer Aspekt ist im Fall der Anwendung des Systems 20 an dem Mähdrescher 30, dass die als Korntankauslaufschnecke ausgebildete Abförderkomponente 6 der Fördervorrichtung 3 ab einem Füllstand oberhalb des Füllstandsensors 14 das schüttgutförmige Korn nicht mehr frei in den Korntank 39 werfen kann, sondern dies nach oben aufschiebt. Dies führt dazu, dass das Korn in der Korntankauslaufschnecke stärker verdichtet wird, sodass eine Kompensation der Dichteschwankung unter Umständen nicht mehr mit hinreichender Genauigkeit möglich ist. Mit dem Passieren einer Füllstandobergrenze erfolgt die Kompensation der Dichteschwankung anhand des letzten ermittelten Justagewertes.

Das Verfahren zum Betreiben des Systems 20 zur Ertragsmessung ist besonders vorteilhaft, da das Verfahren ohne großen Aufwand wiederholt durchgeführt werden kann. Hierdurch lässt sich eine Nachjustage der zumindest einen ersten Sensoreinrichtung aufgrund von Dichteschwankungen durchführen.

Mittels der in der Steuereinrichtung 15 hinterlegten Kennlinien bzw. Kennlinienfelder lässt sich eine Überwachung der durch den Elektromotor 7 angetriebenen Abförderkomponente 6 darstellen. Hierzu können Drehmomentverläufe, die für einen spezifischen Grad an Verschleiß der Abförderkomponente 6 charakteristisch sind, in der Speichereinheit 15b der Steuer in Richtung 15 hinterlegt werden, sodass sich beispielsweise Systemdefekte detektieren lassen.

Das erfindungsgemäße Verfahren ist in entsprechender Weise auch auf das in Figur 3 dargestellte System zur Ertragsmessung anwendbar.

**Bezugszeichenliste**

| | | | |
|---|---|---|---|
| 1 | Behältnis | 36 | Häcksel- und Verteilvorrichtung |
| 2 | Schüttgut | 37 | Querförderschnecke |
| 3 | Fördervorrichtung | 38 | Kornelevator |
| 4 | Querförderkomponente | 39 | Korntank |
| 5 | Vertikalförderkomponente | 40 | Fahrerkabine |
| 6 | Abförderkomponente | 41 | Korntankauslaufrohr |
| 7 | Elektromotor | | |
| 8 | Frequenzumrichter | | |
| 9 | Sensor | | |
| 10 | Drehzahlsensor | | |
| 11 | Erste Sensoreinrichtung | | |
| 12 | Feuchtigkeitssensor | | |
| 13 | Füllstandsensor | | |
| 14 | Füllstandsensor | | |
| 15 | Steuereinrichtung | | |
| 15a | Prozessoreinheit | | |
| 15b | Speichereinheit | | |
| 15c | Eingabe-Ausgabe-Schnittstelle | | |
| 15d | Eingabe-Ausgabe-Schnittstelle | | |
| 16 | Bussystem | | |
| 17 | Eingabe-Ausgabevorrichtung | | |
| 18 | Erste Sensoreinrichtung | | |
| 20 | System zu Ertragsmessung | | |
| 30 | Mähdrescher | | |
| 31 | Erntegut | | |
| 32 | Vorsatzgerät | | |
| 33 | Dreschvorrichtung | | |
| 34 | Abscheidevorrichtung | | |
| 35 | Reinigungsvorrichtung | | |

## Patentansprüche

1. System (20) zur Ertragsmessung, umfassend:
- ein Behältnis (1) zur Aufnahme von Schüttgut (2),
- eine zumindest eine Förderkomponente (4, 5, 6) umfassende Fördervorrichtung (3) zur Zuführung von Schüttgut (2) in das Behältnis (1),
- zumindest eine der Fördervorrichtung (3) zugeordnete erste Sensoreinrichtung (11, 18) zur Bestimmung des Volumens oder des Gewichts des durch die Fördervorrichtung (3) in das Behältnis (1) geförderten Schüttgutes (2),
- eine Steuereinrichtung (15), die zur Auswertung der Signale der zumindest einen ersten Sensoreinrichtung (11, 18) eingerichtet ist,
**dadurch gekennzeichnet, dass**
zumindest eine Förderkomponente (6) durch einen Elektromotor (7) antreibbar ist und dass der Fördervorrichtung (3) zumindest eine weitere Sensoreinrichtung (9) zur Messung wenigstens einer physikalischen Größe des Elektromotors (7) zugeordnet ist, mittels derer ein von der zumindest einen Förderkomponente (6) aufgenommenes Drehmoment durch die Steuereinrichtung (15) bestimmbar ist, wobei die Steuereinrichtung (15) dazu eingerichtet ist, in Abhängigkeit von einem erfassten Füllstand des Schüttguts (2) im Behältnis (1) die Messung der wenigstens einen physikalischen Größe des Elektromotors (7) durchzuführen, wobei das durch die Steuereinrichtung (15) bestimmte Drehmoment zur Kalibrierung der ersten Sensoreinrichtung (11, 18) herangezogen wird.

2. System (20) nach Anspruch 1, **dadurch gekennzeichnet, dass** die Steuereinrichtung (15) zur Durchführung einer Initialmessung der wenigstens einen physikalischen Größe des Elektromotors (7) im lastfreien Zustand der Fördervorrichtung (3) eingerichtet ist.

3. System (20) nach einem der vorangehenden Ansprüche, **dadurch gekennzeichnet, dass** die Steuereinrichtung (15) zur Hinterlegung von Kennlinien oder Kennlinienfeldern für Drehmomentverläufe der durch den Elektromotor (7) angetriebenen Förderkomponente (6) der Fördervorrichtung (3) eingerichtet ist.

4. System (20) nach einem der vorangehenden Ansprüche, **dadurch gekennzeichnet, dass** die zumindest eine weitere Sensoreinrichtung (9) zur Messung von Strom als wenigstens eine physikalische Größe eingerichtet ist.

5. System (20) nach einem der vorangehenden Ansprüche, **dadurch gekennzeichnet, dass** die Steuereinrichtung (15) dazu eingerichtet ist, den Elektromotor (7) mittels eines Frequenzumrichters (8) in Abhängigkeit von einem Betriebsparameter der Fördervorrichtung (3) anzusteuern.

6. System (20) nach einem der vorangehenden Ansprüche, **dadurch gekennzeichnet, dass** das System (20) einen Feuchtigkeitssensor (12) zur Bestimmung der Feuchtigkeit des von der Fördervorrichtung (3) geförderten Schüttgutes (2) umfasst.

7. Verfahren zum Betreiben eines Systems (20) zur Ertragsmessung, wobei von einer zumindest eine Förderkomponente (4, 5, 6) umfassenden Fördervorrichtung (3) einem Behältnis (1) Schüttgut (2) zugeführt wird, dessen Gewicht oder Volumen mittels einer Steuereinrichtung (15) durch eine Auswertung von Signalen zumindest einer der Fördervorrichtung (3) zugeordneten ersten Sensoreinrichtung (11, 18) bestimmt wird, **dadurch gekennzeichnet, dass** zumindest eine Förderkomponente (6) der Fördervorrichtung (3) elektromotorisch angetrieben wird, wobei zur Kalibrierung des Systems (20) zur Ertragsmessung ein von der Fördervorrichtung (3) aufgenommenes Drehmoment durch Messung wenigstens einer physikalischen Größe des Elektromotors (7) mittels zumindest einer weiteren Sensoreinrichtung (9) bestimmt wird.

8. Verfahren nach Anspruch 7, **dadurch gekennzeichnet, dass** die Messungen der physikalischen Größe innerhalb zumindest eines Füllstandintervalls durchgeführt werden.

9. Verfahren nach einem der Ansprüche 7 oder 8, **dadurch gekennzeichnet, dass** eine Initialmessung der wenigstens einen physikalischen Größe des Elektromotors (7) in einem lastfreien Zustand der Fördervorrichtung (3) durchgeführt wird.

10. Verfahren nach einem der vorangehenden Ansprüche, **dadurch gekennzeichnet, dass** die Initialmessung der wenigstens einen physikalischen Größe des Elektromotors (7) während des laufenden Betriebes der Fördervorrichtung (3) wiederholt durchgeführt wird.

11. Verfahren nach einem der vorangehenden Ansprüche, **dadurch gekennzeichnet, dass** zur Bestimmung eines von der Fördervorrichtung (3) aufgenommenen Drehmomentes zumindest der Strom gemessen und ausgewertet wird.

12. Verfahren nach einem der vorangehenden Ansprüche, **dadurch gekennzeichnet, dass** die Feuchtigkeit des von der Fördervorrichtung (3) geförderten Schüttgutes (2) bestimmt wird.

13. Verfahren nach einem der vorangehenden Ansprüche, **dadurch gekennzeichnet, dass** mittels der Steuereinrichtung (15) eine Kennlinie oder ein Kennlinienfeld für einen Drehmomentverlauf der zumindest einen Förderkomponente (6) erstellt wird.

14. Landwirtschaftliches Arbeitsfahrzeug (30), **gekennzeichnet durch** ein System (20) zur Ertragsmessung nach einem der Ansprüche 1 bis 6, wobei das landwirtschaftliche Arbeitsfahrzeug (30) zur Durchführung eines Verfahrens nach einem der Ansprüche 7 bis 13 eingerichtet ist.

## Claims

1. A yield measuring system (20), comprising:
- a container (1) for receiving bulk material (2),
- a conveying device (3) comprising at least one conveying component (4, 5, 6) for feeding bulk material (2) into the container (1),
- at least one first sensor means (11, 18) associated with the conveying device (3) for determining the volume or the weight of the bulk material (2) conveyed into the container (1) by the conveying device (3),
- a control means (15) which is configured for the evaluation of the signals from the at least one first sensor means (11, 18),
**characterized in that**
at least one conveying component (6) can be driven by an electric motor (7) and **in that** at least one further sensor means (9) for measuring at least one physical variable of the electric motor (7) is associated with the conveying device (3) and by means of which a torque taken up by the at least one conveying component (6) can be determined by the control means (15), wherein the control means (15) is configured to carry out the measurement of the at least one physical variable of the electric motor (7) as a function of a detected filling level for the bulk material (2) in the container (1), wherein the torque determined by the control means (15) is used for the calibration of the first sensor means (11, 18).

2. The system (20) according to claim 1, **characterized in that** the control means (15) is configured to carry out an initial measurement of the at least one physical variable of the electric motor (7) in the load-free condition of the conveying device (3).

3. The system (20) according to one of the preceding claims, **characterized in that** the control means (15) is configured to store characteristic curves or performance maps for the torque profiles for the conveying component (6) of the conveying device (3) driven by the electric motor (7).

4. The system (20) according to one of the preceding claims, **characterized in that** the at least one further sensor means (9) is configured to measure current as the at least one physical variable.

5. The system (20) according to one of the preceding claims, **characterized in that** the control means (15) is configured to control the electric motor (7) by means of a frequency converter (8) as a function of an operating parameter of the conveying device (3).

6. The system (20) according to one of the preceding claims, **characterized in that** the system (20) comprises a moisture sensor (12) for determining the moisture content of the bulk material (2) conveyed by the conveying device (3).

7. A method for operating a yield measuring system (20), wherein bulk material (2) is fed to a container (1) from a conveying device (3) comprising at least one conveying component (4, 5, 6) and the weight or volume thereof is determined by means of a control means (15), by means of an evaluation of signals from at least one first sensor means (11, 18) associated with the conveying device (3), **characterized in that** the at least one conveying component (6) of the conveying device (3) is driven by using an electric motor wherein, in order to calibrate the yield measuring system (20), a torque taken up by the conveying device (3) is determined by measuring at least one physical variable of the electric motor (7) by means of at least one further sensor means (9).

8. The method according to claim 7, **characterized in that** the measurements of the physical variable are carried out within at least one filling level interval.

9. The method according to claim 7 or claim 8, **characterized in that** an initial measurement of the at least one physical variable of the electric motor (7) is carried out in a load-free condition of the conveying device (3).

10. The method according to one of the preceding claims, **characterized in that** the initial measurement of the at least one physical variable of the electric motor (7) is carried out repeatedly during the ongoing operation of the conveying device (3).

11. The method according to one of the preceding claims, **characterized in that** at least the current is measured and evaluated in order to determine a torque taken up by the conveying device (3).

12. The method according to one of the preceding claims, **characterized in that** the moisture content of the bulk material (2) conveyed by the conveying device (3) is determined.

13. The method according to one of the preceding claims, **characterized in that** a characteristic curve or performance map for a torque profile of the at least one conveying component (6) is generated by means of the control means (15).

14. An agricultural working vehicle (30), **characterized by** a yield measuring system (20) according to one of claims 1 to 6, wherein the agricultural working vehicle (30) is configured for carrying out a method according to one of claims 7 to 13.

## Revendications

1. Système (20) de mesure de rendement incluant :
- un contenant (1) pour recevoir du produit en vrac (2),
- un dispositif de convoyage (3) incluant au moins un composant de convoyage (4, 5, 6) pour amener du produit en vrac (2) dans le contenant (1),
- au moins un premier équipement de capteur (11, 18) associé au dispositif de convoyage (3) pour déterminer le volume ou le poids du produit en vrac (2) convoyé jusqu'au contenant (1) par l'intermédiaire du dispositif de convoyage (3),
- un équipement de commande (15) qui est agencé pour analyser les signaux du au moins un premier équipement de capteur (11, 18),
**caractérisé en ce que**
au moins un composant de convoyage (6) est entraînable par l'intermédiaire d'un moteur électrique (7) et **en ce qu'**au dispositif de convoyage (3) est associé au moins un autre équipement de capteur (9) pour mesurer au moins une grandeur physique du moteur électrique (7), au moyen de laquelle un moment de rotation adopté par le au moins un composant de convoyage (6) peut être déterminé par l'intermédiaire de équipement de commande (15), l'équipement de commande (15) étant agencé pour effectuer la mesure de la au moins une grandeur physique du moteur électrique (7) en fonction d'un niveau détecté de remplissage du produit en vrac (2) dans le contenant (1), le moment de rotation déterminé par l'intermédiaire de l'équipement de commande (15) étant utilisé pour calibrer le premier équipement de capteur (11, 18).

2. Système (20) selon la revendication 1, **caractérisé en ce que** l'équipement de commande (15) est agencé pour effectuer une mesure initiale de la au moins une grandeur physique du moteur électrique (7) à l'état hors charge du dispositif de convoyage (3).

3. Système (20) selon une des revendications précédentes, **caractérisé en ce que** l'équipement de commande (15) est agencé pour enregistrer des courbes caractéristiques ou des réseaux de courbes caractéristiques pour des variations de moment de rotation du composant de convoyage (6) du dispositif de convoyage (3) entraîné par le moteur électrique (7).

4. Système (20) selon une des revendications précédentes, **caractérisé en ce que** le au moins un autre équipement de capteur (9) est agencé pour mesurer du courant en tant qu'au moins une grandeur physique.

5. Système (20) selon une des revendications précédentes, **caractérisé en ce que** l'équipement de commande (15) est agencé pour entraîner le moteur électrique (7) au moyen d'un convertisseur de fréquence (8) en fonction d'un paramètre d'exploitation du dispositif de convoyage (3).

6. Système (20) selon une des revendications précédentes, **caractérisé en ce que** le système (20) inclut un capteur d'humidité (12) pour déterminer l'humidité du produit en vrac (2) convoyé par le dispositif de convoyage (3).

7. Procédé d'exploitation d'un système (20) de mesure de rendement, par un dispositif de convoyage (3) qui inclut au moins un composant de convoyage (4, 5, 6) étant amené à un contenant (1) du produit en vrac (2) dont le poids ou le volume est déterminé au moyen d'un équipement de commande (15) par l'intermédiaire d'une analyse de signaux au moins d'un premier équipement de capteur (11, 18) associé au dispositif de convoyage (3), **caractérisé en ce qu'**au moins un composant de convoyage (6) du dispositif de convoyage (3) est entraîné de manière électromotrice, afin de calibrer le système (20) de mesure de rendement un moment de rotation adopté par le dispositif de convoyage (3) étant déterminé par l'intermédiaire de équipement de commande (15) au moyen d'au moins un autre équipement de capteur (9) par la mesure au moins d'une grandeur physique du moteur électrique (7).

8. Procédé selon la revendication 7, **caractérisé en ce que** les mesures de la grandeur physique sont effectuées à l'intérieur au moins d'un intervalle de remplissage.

9. Procédé selon une des revendications 7 ou 8, **caractérisé en ce qu'**une mesure initiale de la au moins une grandeur physique du moteur électrique (7) est effectuée dans un état hors charge du dispositif de convoyage (3).

10. Procédé selon une des revendications précédentes, **caractérisé en ce que** la mesure initiale de la au moins une grandeur physique du moteur électrique (7) est effectuée de manière répétée durant le fonctionnement du dispositif de convoyage (3).

11. Procédé selon une des revendications précédentes, **caractérisé en ce que**, pour déterminer un moment de rotation adopté par le dispositif de convoyage (3), au moins le courant est mesuré et analysé.

12. Procédé selon une des revendications précédentes, **caractérisé en ce que** l'humidité du produit en vrac (2) convoyé par le dispositif de convoyage (3) est déterminée.

13. Procédé selon une des revendications précédentes, **caractérisé en ce qu'**une courbe caractéristique ou un réseau de courbes caractéristiques pour une variation de moment de rotation du au moins un composant de convoyage (6) est établi au moyen de l'équipement de commande (15).

14. Engin agricole (30), **caractérisé par** un système (20) pour la mesure de rendement selon une des revendications 1 à 6, l'engin agricole (30) étant agencé pour mettre en œuvre un procédé selon une des revendications 7 à 13.
